# EUROPÄISCHE PATENTSCHRIFT

(11) **EP 2 901 889 B1**
(45) Veröffentlichungstag und Bekanntmachung des Hinweises auf die Patenterteilung: **04.05.2016**
(21) Anmeldenummer: 15156563.7
(22) Anmeldetag: 13.12.2005
(51) Int. Cl.: A47B 47/04, F16B 12/46, F16B 12/26

(54) **Möbel**
Furniture
Meuble

(30) Priorität: 20.12.2004 DE 202004019882 U
(43) Veröffentlichungstag der Anmeldung: 05.08.2015
(62) Teilanmeldung aus: 05027144.4
(73) Patentinhaber: Fritz Egger GmbH & Co. OG, 6380 St. Johann in Tirol (AT)
(72) Erfinder: Reiter, Bruno, 6380 St. Johann in Tirol (AT); Nerf, Helmut, 84577 Tüßling (DE); Horn, Raimund, 8763 Oswald (AT)
(74) Vertreter: Cohausz & Florack

(56) Entgegenhaltungen:
- US-A- 3 442 311
- US-A1- 2004 237 447
- US-B1- 6 413 007

## Beschreibung

Die Erfindung betrifft ein Möbel gemäß Oberbegriff von Anspruch 1. Ein entsprechendes möbel ist aus der US 6 413 007 B1 bekannt.

Nach dem Stand der Technik werden solche Möbelteile durch zumeist metallische Elemente verbunden, die als Beschläge bezeichnet werden. Die Verbindung zwischen den Möbelteilen kann auch durch Klebeverbindungen in Kombination mit Hilfsmitteln wie Dübeln realisiert werden.

Die EP 1 295 045 zeigt einen Beschlag mit dem Elemente, die in gleicher Ebene, wie etwa Arbeitsplatten für Küchen, im Bereich von Eckstößen verbunden werden können. Nachteilig an solchen Beschlägen ist, dass zum Zwecke der genauen Positionierung der zu verbindenden Teile gegeneinander Einstellarbeiten vorgenommen werden müssen.

Aus der DE 295 22 390 U1 sind Verbindungen zwischen zwei Möbelteilen bekannt, bei denen zu verbindende Möbelteile bereits durch einen elastischen Kleber als Scharnier verbunden sind, der eine Schwenkbewegung der verbundenen Teile gegeneinander ermöglicht. Im Zuge der Montage werden die beiden Möbelteile in die gewünschte Position verschwenkt. Dabei dient der Kleber nicht einer Fixierung der Möbelteile in einer festen Position, sondern einer Verschwenkbarkeit der Plattenteile zueinander, wodurch die Lagerung und der Transport der Möbelteile vereinfacht wird.

Möbelteile, die im montierten Zustand einen Winkel miteinander einschließen sollen, wie etwa Korpuselemente, werden sehr häufig mit Spannbolzen und Exzenterschrauben fixiert. Dazu wird in ein erstes Möbelteil ein Spannbolzen geschraubt und in ein zweites Möbelteil beabstandet von der Seitenkante eine Exzenterschraube eingelassen. In eine zusätzliche Bohrung der Schmalfläche des zweiten Möbelteils, die zur Exzenterschraube führt, wird dann der Spannbolzen eingeführt und in der Exzenterschraube fixiert. Für jeweils zwei zu verbindende Möbelteile sind mindestens zwei solcher Spannbolzen mit Exzenterschraube erforderlich, die ihrerseits wieder mindestens drei Bohrungen unterschiedlicher Abmessungen erfordern. Neben der Vielzahl an notwendigen Bohrungen und den damit verbundenen Arbeitsschritten ist an solchen Verbindungen auch der Umstand nachteilig, dass stets das Loch mit der Exzenterschraube an einer Elementfläche sichtbar bleibt.

Möbelteile, die durch Klebeverbindungen miteinander verbunden werden, sind ebenso aus dem Stand der Technik bekannt. Zur Vergrößerung der Klebeflächen und für die exakte Positionierung der zu verbindenden Möbelteile werden Dübel oder sonstige Verbindungselemente vorgesehen, für die in einem vorhergehenden Arbeitsschritt entsprechende Löcher oder Einfräsungen eingebracht werden müssen. Im Zuge des anschließenden Verleimens wird dann eine unlösbare Verbindung geschaffen. Eine kostengünstige Fertigung ist beinahe ausgeschlossen, da während dem Abbinden des Leims eine Einspannung erfolgen muss. Auch ist der Platzbedarf solcherart gefertigter Elemente unvergleichlich höher als bei Elementen, die am vorgesehenen Aufstellort erst montiert werden können.

Daher liegt der vorliegenden Erfindung das technische Problem zugrunde, Möbelteile mit einer Verbindung anzugeben, die einfacher herzustellen und einfacher zu montieren sind.

Erfindungsgemäß wird das zuvor aufgezeigte technische Problem durch ein Möbel mit den Merkmalen des Anspruches 1 gelöst.

Somit wird eine rein mechanische Verbindung zwischen den Möbelteilen hergestellt, die einen Aufbau und eine Montage des Möbels erheblich vereinfacht. Insbesondere für den Bereich der vom Kunden selbst aufzubauenden Möbel, den sogenannten Mitnahmemöbeln kann diese Art der Verbindung zwischen Möbelteilen Vorteile bringen. Denn durch eine einfache Linear bewegung können die beiden Möbelteile miteinander verbunden werden, wodurch ein sicherer Halt der somit verbundenen Möbelteile erreicht wird.

Im Gegensatz zum Stand der Technik sind keine Schrauben oder Bohrungen erforderlich, die eine Mehrzahl von Handgriffen bei der Montage erfordern.

Ein weiterer Vorteil der mechanischen Verriegelung besteht darin, dass die Verriegelungselemente im verriegelten Zustand ein sehr genaues Ausrichten der Möbelteile zueinander bewirken. Dadurch können die Möbel nicht nur schnell, sondern auch sehr präzise zusammengebaut werden.

In besonders bevorzugter Weise bestehen die Verriegelungselemente aus dem Material des Möbelteils und sind vorzugsweise aus diesem Material herausgearbeitet. Somit haben die Verriegelungselemente die gleichen mechanischen Eigenschaften wie die Möbelteile selbst.

Alternativ dazu kann mindestens ein Verriegelungselement aus einem anderen Material als das Material des Möbelteils bestehen. Dabei ist es weiter bevorzugt, dass das Material ein Kunststoff ist. In dieser Weise kann eine größere Variabilität des Aufbaus des Möbels erreicht werden.

Weiterhin können die Verriegelungselemente durchgängig entlang der Verbindungsfläche ausgebildet sein. In diesem Fall wird eine maximale Stabilität erreicht, da die gesamte Verbindungsfläche mit Hilfe der Verriegelungselemente zusammengehalten wird.

Es kann jedoch auch bevorzugt sein, die Verriegelungselemente nur abschnittsweise entlang der Verbindungsfläche auszubilden. In diesem Fall wird der Bearbeitungsaufwand verringert, wodurch möglicher Weise Kosten eingespart werden können. Bei einer nur abschnittsweisen Ausbildung der Verriegelungselemente kann auch gezielt nur in den kritischen Bereichen der Verbindungsflächen die Verriegelung vorgenommen werden, während andere Abschnitte mit geringeren Anforderungen an die Stabilität auch ohne Verriegelungselemente auskommen können.

Erfindungsgemäß ist vorgesehen, dass das erste Verriegelungselement und das zweite Verriegelungselement durch eine formschlüssige Verbindung und durch eine kraftschlüssige Verbindung miteinander verbunden werden. Dazu muss während des Zusammenfügens ein mechanischer Widerstand überwunden werden, um ein Hintergreifen von Abschnitten der Verriegelungselemente zu erreichen. Durch das Hintergreifen ist ein Lösen der Verbindung ohne Kraftaufwand nicht möglich. Durch eine spezifische Wahl des Profils der Verriegelungselemente kann diese Auszugskraft eingestellt werden. Dabei wird die Auszugskraft so eingestellt, dass bei einer normalen Benutzung des Möbels und der dabei entstehenden Kräfte die Verriegelungselemente der Möbelteile nicht auseinander gezogen werden.

Für die Ausgestaltung der Verriegelungselemente der zuvor beschriebenen Art ist es bevorzugt, dass das erste Verriegelungselement und/oder das zweite Verriegelungselement einen elastisch verformbaren Abschnitt aufweisen. Dabei bedeutet elastisch verformbar, dass entweder der entsprechende Abschnitt während des Herstellens der Verbindung zwischen den Verriegelungselementen elastisch verbogen bzw. durchgebogen oder elastisch zusammengedrückt wird. Im verbundenen Zustand kann dann die elastische Verformung vollständig oder nur teilweise wieder aufgehoben sein. Wenn die elastische Verformung noch teilweise bestehen bleibt, ergibt sich aus der verbleibenden Verformung eine zusammenziehende Kraft, die die beiden Möbelteile zusammenhält und die Auszugskraft erhöht.

Die Möbelteile können in verschiedenen Positionen zueinander befestigt werden. In einer ersten Ausgestaltung der vorliegenden Erfindung halten die erste Verbindungsfläche und die zweite Verbindungsfläche die Möbelteile in einer planaren Anordnung. Die so miteinander verbundenen Möbelteile sind dann in einer Ebene angeordnet. Beispiele für derartige Möbelteile sind mehrteilige Tischplatten oder mehrteilige Bearbeitungsplatten in Küchen.

Durch die zuvor beschriebenen Möbelteile können aber auch auf einfache Weise Platten, die bisher in einem Stück geliefert wurden, aus mehreren Teilen an den für den Einbau bestimmten Ort angeliefert und dort zusammengesetzt werden. Diese bietet deutliche Vorteile beim Transport. Auch ist es so möglich durch Kombination von Möbelteilen mit Oberflächen mit unterschiedlichen Dekoren bestimmte optische Effekte zu erzielen.

Die Verbindung zwischen jeweils zwei Möbelteilen kann auch zwischen Randleisten, die ein beliebig wählbares Dekor und/oder Profil aufweisen, und einem Plattenelement, das beispielsweise eine Tischfläche bildet, anwenden. Dadurch können verschiedene Plattendekore mit verschiedenen Kanten versehen werden, wodurch eine Vielzahl unterschiedlicher Gestaltungsmöglichkeiten eröffnet wird.

Bei einer zweiten Ausgestaltung der vorliegenden Erfindung halten die erste Verbindungsfläche und die zweite Verbindungsfläche die Möbelteile in einer gewinkelten Anordnung. Dabei können nicht nur Winkel von 90° realisiert werden, sondern auch beliebige andere Winkel zwischen etwa 15 und 180°. Derartige Möbelteile werden bevorzugt beim Aufbau von Möbelkorpussen eingesetzt.

Die Erfindung ist nicht auf bestimmte Holzwerkstoffe beschränkt. Alle für den Möbelbau verwendbaren Werkstoffe, im besonderen Holzwerkstoffe sind für die Anwendung geeignet. Wesentlich ist lediglich, dass Profilform und Festigkeitseigenschaften des Materials aufeinander abgestimmt sind.

Die zuvor beschriebenen Möbelteile werden in vorteilhafter Weise derart ausgestaltet, dass Vorkehrungen getroffen werden, die eine freie Sicht auf die Enden der Verriegelungselemente verhindern. Dies kann einerseits durch nachträglich aufgebrachte Abdeckungen an den betroffenen Schmalflächen, oder durch ein Absetzen der Verbindungsprofile vor den sichtbaren Kanten, bewerkstelligt werden. Mit anderen Worten, die Verriegelungselemente erstrecken sich nicht bis zum von außen sichtbaren Rand, sondern enden innerhalb der Verbindungsfuge.

Zum verbesserten Dichten und/oder Fixieren der Verbindungselemente können diese zusätzlich verklebt werden, wobei ein Klebstoff unmittelbar vor der Montage aufgebracht sein kann oder bereits im Zuge der Elementfertigung bereits werkseitig appliziert wird, der dann beim Zusammenfügen der Elemente aktiviert wird. Auch kann vor oder nach dem Zusammenfügen der Elemente an deren Stoß eine niederviskose Versiegelungslösung aufgebracht werden, die dort eine Abdichtung bewirkt.

Wird keine solche Verklebung vorgenommen oder lediglich ein Dichtmittel ohne besondere Klebeeigenschaften verwendet, besteht ein weiterer Vorteil der zuvor beschriebenen Verbindung gegenüber den beschriebenen verklebten Verbindungen in der Lösbarkeit bzw. der mehrfachen Anwendbarkeit der Verbindung.

In bevorzugter Weise ist der Kleber werkseitig auf eine oder beide Seitenkanten aufgebracht worden, so dass die Möbelteile vorverleimt sind. Dazu sind verschiedenen Klebersysteme an sich bekannt. Beispielsweise kann ein Kontaktklebstoff, ein Mehrkomponentenklebstoff oder auch ein mikroverkapseltes Klebersystem verwendet werden.

Die Möbelteile bilden weiterhin im verbundenen Zustand eine Fuge zwischen sich aus. Bevorzugt ist jeweils an der Kantenlinie zwischen Außenseite und dem senkrecht verlaufenden Abschnitt der Verbindungsfläche eine Abschrägung vorgesehen. Bevorzugt ist diese Abschrägung so ausgebildet, dass die entstehende Fuge eine V-Fuge ist.

In einer weiteren Ausbildung des Ausführungsbeispiels sind die Abschrägungen mit einer Beschichtung, vorzugsweise mit einer Lackschicht versehen. In dieser Weise können die die Fuge bildenden Abschnitte an die Farbe bzw. das Dekor der Möbelteile angepasst werden.

Des Weiteren kann im Bereich der Verbindungsflächen eine Dichtung vorgesehen sein, die im verbundenen Zustand der Möbelteile die Trennfuge zwischen den Möbelteilen abdichtet. Eine solche Dichtung besteht bevorzugt aus einem dauerelastischen Material wie Gummi oder Schaumstoff. Jedenfalls wird die Dichtung beim Zusammenfügen der Möbelteile zumindest teilweise komprimiert, so dass es zu einer abdichtenden Anlage der Möbelteile aneinander kommt. Dabei ist es bevorzugt, dass die Dichtung bereits bei der Herstellung der Möbelteile mit diesen verbunden wird. Damit wird ein kompliziertes Anbringen der Dichtung am Ort des Zusammenbauens vermieden.

Schließlich soll noch auf einen besonderen Vorteil der vorliegenden Erfindung hingewiesen werden. Im Stand der Technik ist es beim Zusammenbauen von Möbeln mit fertigen Möbelteilen üblich, diese mit Holzdübeln und Beschlägen zusammen zu fügen und zu befestigen. Die dabei entstehenden Verbindungen zwischen den Möbelteilen sind nicht formstabil, so dass es besonderer Montagehilfen bedarf. Diese bestehen aus Rahmen in der Größe des zusammen zu bauenden Möbels. Die einzelnen Möbelteile werden innerhalb der Montagehilfe zusammengefügt und verbunden. Dieses kann rein mechanisch oder unter Zuhilfenahme von Leim erfolgen. Jedenfalls ist erst am Ende der Montage ein fester Korpus vorhanden, der ohne die Montagehilfe von einer Person gehandhabt werden kann.

Dieses Montageverfahren erfordert es daher, dass die Möbel nicht vor Ort, also am Aufstellungsort zusammengebaut werden, sondern in einer Fertigungsstätte fertig montiert werden müssen. Der Transport der Möbel ist dann recht aufwändig, da die aufgebauten Möbel ein großes Volumen einnehmen.

Mit zuvor im Detail beschriebenen Möbelteilen und deren besonderen Ausgestaltungen ist eine Benutzung einer Montagehilfe nicht mehr erforderlich. Die mechanischen Verriegelungselemente und Verbindungsflächen ermöglichen durch ihre präzise Form und durch das präzise Zusammenwirken ein stabiles Zusamenfügen der Möbelteile. Die Möbelteile können daher auch im industriellen Maßstab vor Ort zusammengebaut werden. Der Transportaufwand wird daher erheblich verringert, da nur noch ein viel geringeres Volumen benötigt wird.

Im Folgenden wird die Erfindung anhand von Ausführungsbeispielen näher erläutert, wozu auf die beigefügte Zeichnung Bezug genommen wird. In der Zeichnung zeigen
- Fig. 1: ein Ausführungsbeispiel von Verriegelungselementen, die für eine formschlüssige Verbindung zwischen Platten vorgesehen sind, das nicht Gegenstand der Erfindung ist,
- Fig. 2: einen Grundriss einer Arbeitsplatte mit einem Eckstoß, die nicht Gegenstand der Erfindung ist,
- Fig. 3: ein erstes Ausführungsbeispiel von Verriegelungselementen, die für eine kraftschlüssige Verbindung zwischen zwei im rechten Winkel zueinander angeordneten Möbelteilen eines erfindungsgemäßen Möbels vorgesehen sind,
- Fig. 4: eine perspektivische Darstellung eines Möbels mit Möbelteilen, die mit Verriegelungselementen gemäß Fig. 3 miteinander verbunden sind,
- Fig. 5: ein zweites Ausführungsbeispiel von Verriegelungselementen, die für eine kraftschlüssige Verbindung zwischen zwei im schrägen Winkel zueinander angeordneten Möbelteilen eines erfindungsgemäßen Möbels vorgesehen sind,
- Fig. 6: eine perspektivische Darstellung eines Möbels mit Möbelteilen gemäß Fig. 5 und
- Fig. 7: ein Ausführungsbeispiel mit Verriegelungselementen aus unterschiedlichen Materialien.

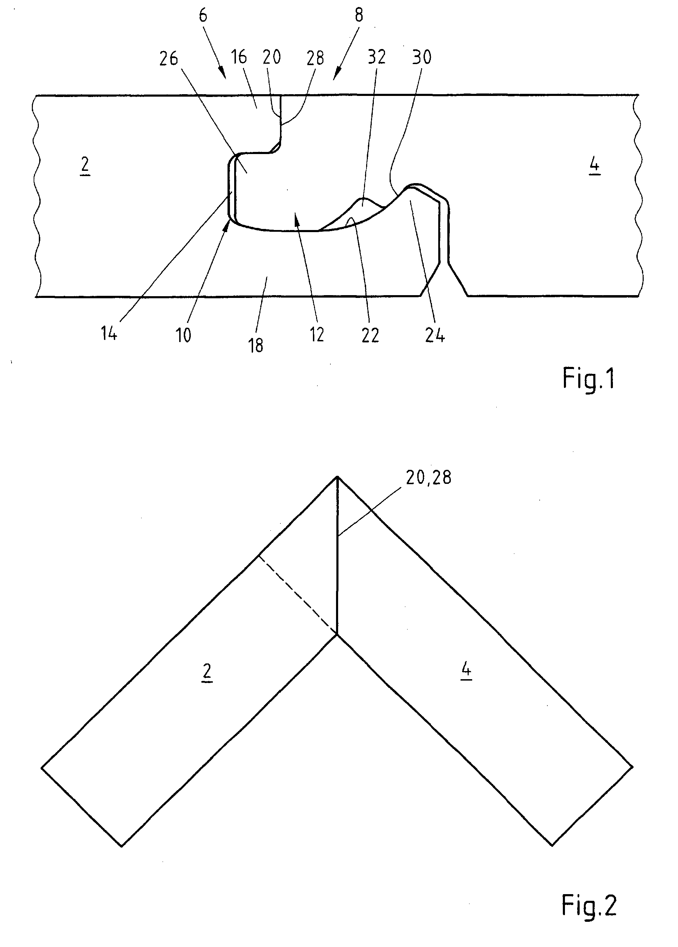

Ein Beispiel eines Möbels ist in den Fig. 1 und 2 dargestellt. Dieses Beispiel ist nicht Gegenstand der Erfindung sondern dient zum besseren Verständnis.

Dieses Beispiel zeigt die Verbindung angewendet bei einem Eckstoß einer Küchenarbeitsplatte. Fig. 1 zeigt eine mögliche Profilform der Verriegelungselemente für einen solchen Anwendungsfall. In Fig. 2 ist an einer Grundrissdarstellung der Verlauf der Verbindung zwischen den Teilen der Küchenarbeitsplatte zu erkennen. Ebenso möglich und das bei verringertem Verschnitt wäre eine Verbindung auch zwischen dem Ende einer Längskante des einen Plattenteils und der Querkante des anderen Plattenteils vorzusehen.

Fig. 1 zeigt also einen Teil eines Möbels in Form von zwei Möbelteilen 2 und 4, die als Arbeitsplattenteile ausgebildet sind. Das gesamte Möbel besteht dann aus einem nicht dargestellten Unterbau in Form eines oder mehrerer Möbelkorpusse, auf die die Arbeitsplatte aus den beiden Plattenteilen 2 und 4 aufgesetzt und ggf. befestigt ist. Eine Draufsicht bzw. einen Grundriss der Arbeitsplatte ist in Fig. 2 dargestellt.

Das in Fig. 1 links dargestellte erste Möbelteil 2 weist eine erste Verbindungsfläche 6 auf, die mit einer zweiten Verbindungsfläche 8 des in Fig. 1 rechts dargestellten weiteren Möbelteils 4 verbunden werden kann. Im verbundenen Zustand liegen dann die Verbindungsflächen 8 und 10 zumindest teilweise aneinander an. Dieses ist bei dem in Fig. 1 dargestellten Beispiel im Bereich der oberen Stoßkante der Fall.

Die erste Verbindungsfläche 6 weist ein erstes Verriegelungselement 10 und die zweite Verriegelungsfläche 8 ein zweites Verriegelungselement 12 für eine mechanische Verriegelung miteinander auf. Dazu greifen die beiden Verriegelungselemente 10 und 12 ineinander ein, so dass sich in Fig. 1 eine Verriegelung in vertikaler und horizontaler Richtung ergibt.

Die Verriegelungselemente 10 und 12 sind beide aus dem Material des Möbelteils herausgearbeitet und bestehen daher aus dem gleichen Material wie die Möbelteile selbst. Diese Ausführungsform ist bevorzugt. Es existiert jedoch auch die Möglichkeit, dass eines der beiden Verriegelungselemente oder beide Verriegelungselemente aus einem vom Plattenmaterial verschiedenen Material hergestellt sind und mit der jeweiligen Platte verbunden sind.

Wie Fig. 1 zeigt, werden das erste Verriegelungselement 10 und das zweite Verriegelungselement 12 durch eine formschlüssige Verbindung miteinander verbunden. Dazu weisen die beiden Verriegelungselemente die folgende beispielhafte spezifische Form auf.

Das Möbelteil 2 weist an der Verbindungskante 6 eine Nut 14 auf, die von einer oberen Lippe 16 und einer unteren Lippe 18 begrenzt wird. Die untere Lippe 18 weist eine größer Erstreckung in Richtung des distalen Endes als die obere Lippe 16 auf. Mit anderen Worten, die untere Lippe 18 steht über das distale Ende der oberen Lippe 16 vor. Das distale Ende der oberen Lippe 18 weist einen senkrecht verlaufenden Abschnitt 20 auf. Die obere Fläche 22 der unteren Lippe 18 weist einen teilweise gekrümmten Verlauf auf, so dass der obere Abschnitt 24 des distalen Endes der unteren Lippe 18 nach oben vorsteht.

Das Möbelteil 4 weist an der Verbindungskante 8 eine Feder 26 auf, an deren oberen Verlauf ein senkrecht verlaufender Abschnitt 28 angeordnet ist. Die untere Fläche 30 der Feder 26 weist einen gekrümmten Verlauf auf, der im Wesentlichen an den gekrümmten Verlauf der oberen Seite 22 der unteren Lippe 18 angepasst ist.

Das Zusammenfügen der beiden Verriegelungselemente 10 und 12 kann dadurch bewirkt werden, dass das zweite Möbelteil 4 in einem Winkel zum ersten Möbelteil 2 gehalten wird, während die Feder 26 teilweise in die Nut 14 eingeführt wird. In einer Zwischenposition kann eine in der unteren Fläche 30 angeordneten Ausnehmung 32, die lediglich optional ist, mit dem vorstehenden oberen Abschnitt 24 in Eingriff stehen. Durch eine Drehbewegung wird dann die Feder 26 bis in die Endposition hinein in die Nut 14 eingeführt, so dass die in Fig. 1 dargestellte verriegelte Position erreicht wird. Die beiden Möbelteile 2 und 4 sind dann in einer planaren Anordnung zueinander angeordnet, wobei die beiden oberen Abschnitte 20 und 28 aneinander anliegen und die Stoßfuge bilden.

Aus der zuvor angegebenen Beschreibung der Verriegelungselemente ergibt sich, dass die Verbindung zwischen den Verriegelungselementen 10 und 12 lösbar ist, indem das zweite Möbelteil 4 um einen Winkel nach oben geschwenkt wird, so dass die Feder 26 außer Eingriff mit der Nut 14 gelangt. Dieses ist aber unschädlich für die Verbindung der dargestellten Möbelteile 2 und 4, da diese an dem nicht in Fig. 1 dargestellten Unterbau befestigt werden. Dadurch werden die Möbelteile 2 und 4 nicht nur in einer vorgegebenen Position gehalten, sondern die Möbelteile 2 und 4 werden auch am Unterbau festgehalten, so dass ein Abheben der Möbelteile verhindert wird.

Fig. 2 zeigt die Anordnung der beiden Möbelteile bzw. Platten 2 und 4, die eine Arbeitsplatte beispielsweise eines Küchenmöbels bilden. Zu erkennen ist die im 45°-Winkel verlaufende Stoßfuge zwischen den beiden Platten 2 und 4, die durch die beiden senkrecht verlaufenden Abschnitte 20 und 28 gebildet wird. Der Verlauf der Stoßfuge ist beliebig wählbar. Denn die Stoßfuge und somit die Verbindungsflächen 6 und 8 können beispielsweise auch entlang der gestrichelt eingezeichneten Linie verlaufen.

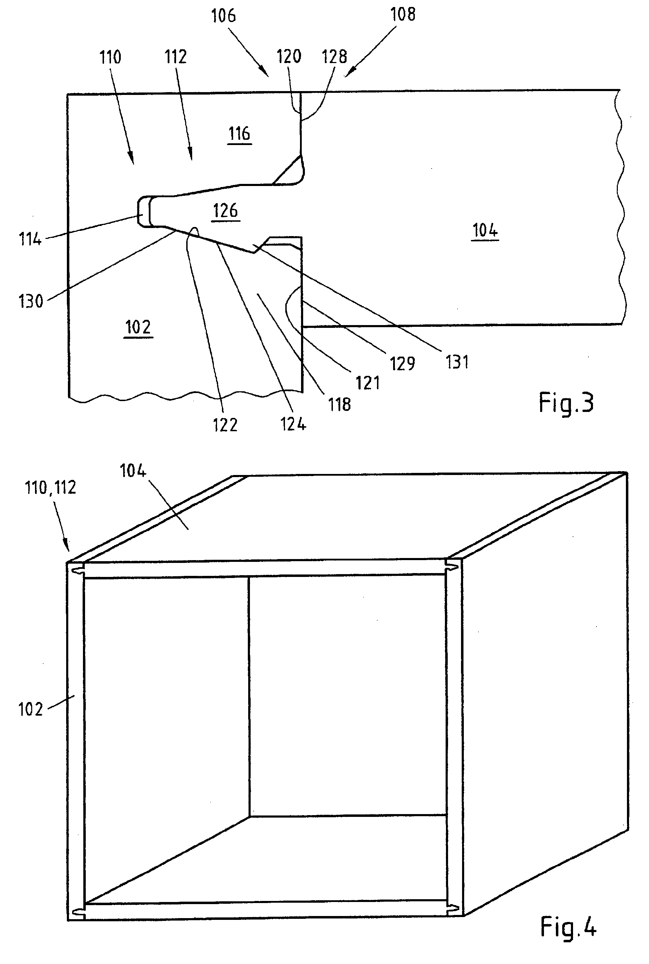

In den Fig. 3 und 4 ist ein erstes Ausführungsbeispiel eines erfindungsgemäßen Möbels dargestellt. Dieses Beispiel zeigt die Anwendung der Verbindung zwischen zwei Platten eines Möbelkorpus. Fig. 3 zeigt eine mögliche Profilform für einen solchen Anwendungsfall. In Fig. 4 ist ein Möbelkorpus dargestellt, der mit Hilfe der in Fig. 3 dargestellten Verbindung hergestellt worden ist.

Fig. 3 zeigt also einen Teil eines Möbel in Form von zwei Möbelteilen 102 und 104, die als Möbelkorpus ausgebildet sind. Das gesamte Möbel besteht dann aus mehreren miteinander verbundenen Möbelplatten. Eine perspektivische Ansicht des gesamten Korpus ist in Fig. 4 dargestellt.

Das in Fig. 3 links dargestellte Möbelteil 102 weist eine erste Verbindungsfläche 106 auf, die mit einer zweiten Verbindungsfläche 108 des in Fig. 3 rechts dargestellten weiteren Möbelteils 104 verbunden werden kann. Im verbundenen Zustand liegen dann die Verbindungsflächen 108 und 110 zumindest teilweise aneinander an. Dieses ist bei dem in Fig. 1 dargestellten Beispiel im Bereich der oberen und der unteren Stoßkante der Fall.

Die erste Verbindungsfläche 106 weist ein erstes Verriegelungselement 110 und die zweite Verriegelungsfläche 108 ein zweites Verriegelungselement 112 für eine mechanische Verriegelung miteinander auf. Dazu greifen die beiden Verriegelungselemente 110 und 112 ineinander ein, so dass sich in Fig. 3 eine Verriegelung in vertikaler und horizontaler Richtung ergibt.

Die Verriegelungselemente 110 und 112 sind beide aus dem Material des Möbelteils herausgearbeitet und bestehen daher aus dem gleichen Material wie die Möbelteile selbst. Diese Ausführungsform ist bevorzugt. Es existiert jedoch auch die Möglichkeit, dass eines der beiden Verriegelungselemente oder beide Verriegelungselemente aus einem vom Plattenmaterial verschiedenen Material hergestellt sind und mit der jeweiligen Platte verbunden sind.

Wie Fig. 3 zeigt, werden das erste Verriegelungselement 110 und das zweite Verriegelungselement 112 durch eine formschlüssige und zugleich kraftschlüssige Verbindung miteinander verbunden. Dazu weisen die beiden Verriegelungselemente die folgende beispielhafte spezifische Form auf.

Das Möbelteil 102 weist an der Verbindungskante 106 eine Nut 114 auf, die von einer oberen Lippe 116 und einer unteren Begrenzung 118 begrenzt wird. Die untere Begrenzung 118 weist eine gleiche Erstreckung in Richtung des distalen Endes wie die obere Lippe 116 auf. Mit anderen Worten, die untere Lippe 118 ist gleich lang wie die obere Lippe 116. Das distale Ende der oberen Lippe 116 und das distale Ende der unteren Lippe 118 weisen jeweils einen senkrecht verlaufenden Abschnitt 120 bzw. 121 auf. Die obere Fläche 122 der unteren Lippe 118 weist eine Vertiefung 124 auf.

Das Möbelteil 104 weist an der Verbindungskante 108 eine Feder 126 auf, wobei oberhalb und unterhalb der Feder jeweils ein senkrecht verlaufender Abschnitt 128 bzw. 129 angeordnet ist. Die untere Fläche 130 der Feder 126 weist ein vorstehendes Element 131 auf, das im Wesentlichen an die Form der Vertiefung 124 der oberen Seite 122 der unteren Lippe 118 angepasst ist.

Das Zusammenfügen der beiden Verriegelungselemente 110 und 112 kann dadurch bewirkt werden, dass das zweite Möbelteil 104 in einem rechten Winkel zum ersten Möbelteil 102 gehalten wird, während die Feder 126 in die Nut 114 eingeführt wird, so dass die in Fig. 3 dargestellte verriegelte Position erreicht wird. Die beiden Möbelteile 102 und 104 sind dann in einer senkrechten Anordnung zueinander angeordnet und die Abschnitte 120 und 128 sowie 121 und 129 liegen paarweise aneinander an.

Während des Verbindens der beiden Verriegelungselemente 110 und 112 kommt es zu einem Einrasten, so dass nicht nur eine formschlüssige Verbindung, sondern auch eine kraftschlüssige Verbindung entsteht. Dazu weist bei dem in den Fig. 3 und 4 dargestellten Ausführungsbeispiel die Nut 114 und/oder die Feder 126 einen elastisch verformbaren Abschnitt auf, der während des Zusammenfügens zusammengedrückt oder ausgelenkt wird. Kurz bevor die beiden Verriegelungselemente dann ihre Endposition erreichen, wird wegen des Formschlusses die elastische Verformung ganz oder weitgehend aufgehoben. Für ein Auseinanderziehen der Verriegelungselemente 110 und 112 ist dann eine Kraft erforderlich.

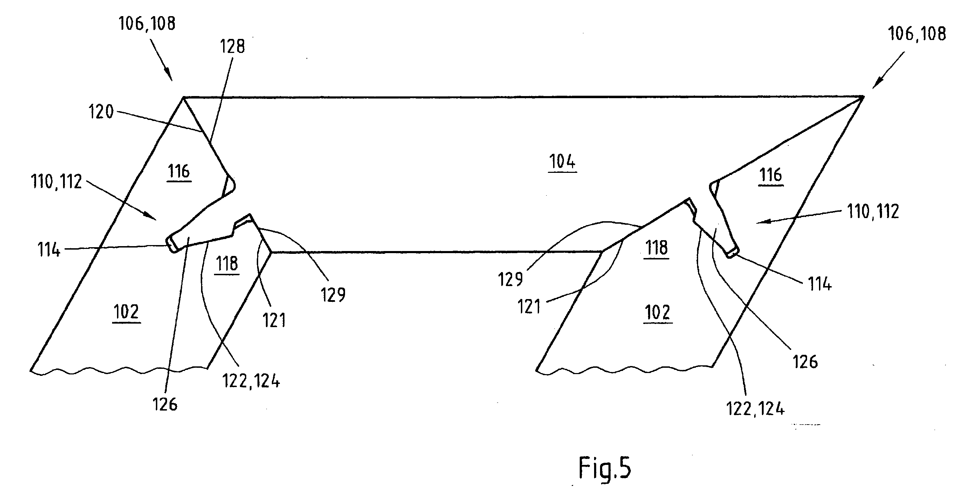

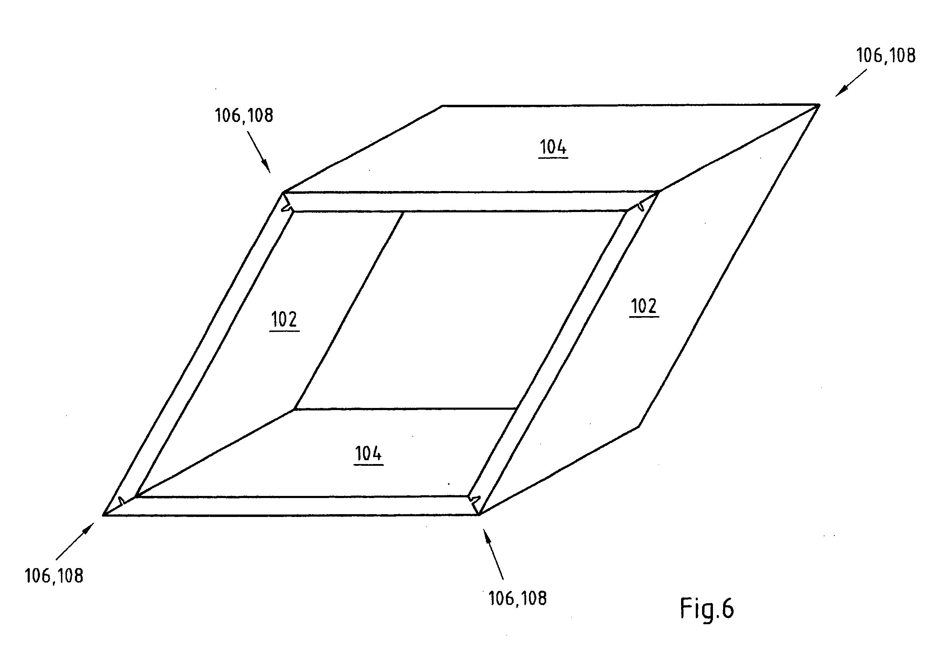

In den Fig. 5 und 6 ist ein zweites Ausführungsbeispiel eines erfindungsgemäßen Möbels dargestellt, wobei gleiche Bezugszeichen gleiche Elemente wie beim ersten Ausführungsbeispiel gemäß den Fig. 3 und 4 kennzeichnen.

Das erste Beispiel zeigt die Anwendung der Verbindung zwischen zwei Platten eines Möbelkorpus. Fig. 5 zeigt eine mögliche Profilform, die vorliegend im Wesentlichen gleich wie im ersten Ausführungsbeispiel ausgebildet sind. In Fig. 6 ist ein Möbelkorpus dargestellt, der mit Hilfe der in Fig. 5 dargestellten Verbindung hergestellt worden ist.

Im Unterschied zum ersten Ausführungsbeispiel sind die Möbelteile im vorliegenden zweiten Beispiel nicht im rechten Winkel zueinander ausgerichtet, sondern schließen einen stumpfen Winkel - in Fig. 5 links - oder einen spitzen Winkel - in Fig. 5 rechts - ein. Dadurch ist es erforderlich, die Verbindungsflächen 106 und 108 in einem entsprechenden Winkel zueinander auszurichten, damit die stabile mechanische Verbindung zwischen den jeweils beiden Möbelteilen 102 und 104 zu erzielen.

Fig. 6 zeigt in perspektivischer Ansicht den fertig zusammengebauten Möbelkorpus mit schräg angestellten Seitenwänden 102, während der Boden und der Deckel 104 jeweils im Wesentlichen horizontal ausgerichtet ist.

Außer der winkligen Anordnung der Verbindungsflächen 106 und 108 unterscheidet sich dieses Ausführungsbeispiel nicht wesentlich vom ersten Ausführungsbeispiel, so dass auf die zuvor anhand der Fig. 3 und 4 gegebenen Beschreibungen der einzelnen Merkmale verwiesen wird.

Die in den Fig. 1 bis 6 dargestellten Verriegelungselemente sind jeweils einstückig aus dem Material des Möbelteils herausgearbeitet worden.

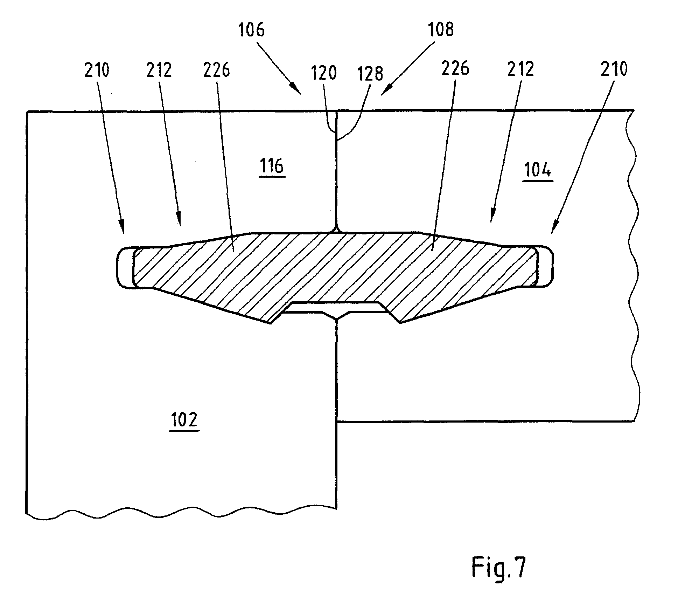

Fig. 7 zeigt eine ähnliche Anordnung wie in Fig. 3, wobei gleiche Bezugszeichen gleiche Elemente bezeichnen. Im Gegensatz zum ersten Ausführungsbeispiel nach Fig. 3 ist hier eine zweiteilige Ausführung der Verriegelungselemente gewählt worden. An beiden Verbindungskanten 106 und 108 sind Nuten 210 ausgebildet, die mittels einer Doppelfeder 226 miteinander verbunden sind. Die Doppelfeder 226 weist zu beiden Seiten Verriegelungselemente 212 in Form von Federn auf, wobei die Form der Feder identisch mit der aus der Fig. 3 bekannten Feder ist. Daher wird auf eine detaillierte Darstellung der einzelnen Flächen der Doppelfeder 226 an dieser Stelle verzichtet. Im übrigen ist als bevorzugtes Material Kunststoff gewählt worden, aus dem die Doppelfeder 226 besteht.

## Patentansprüche

1. Möbel
- mit mindestens zwei aus einem Holzwerkstoff bestehenden und miteinander verbundenen plattenförmigen Möbelteilen (102,104), die winkelig zueinander ausgerichtet sind,
- von denen ein erstes Möbelteil (102) mindestens eine erste Verbindungsfläche (106) aufweist,
- von denen ein zweites Möbelteil (104) eine zweite Verbindungsfläche (108) aufweist und
- wobei die erste Verbindungsfläche (106) und die zweite Verbindungsfläche (108) im verbundenen Zustand der Möbelteile (102, 104) eine Verbindungsfuge (120) ausbilden,
- wobei die erste Verbindungsfläche (106) ein erstes Verriegelungselement (110, 212) in Form einer Nut (114, 210) die von einer oberen Lippe (116) und einer unteren Lippe (118) mit jeweils einem distalen Ende begrenzt wird, und die zweite Verbindungsfläche (108) ein zweites Verriegelungselement (112, 226) in Form einer Feder (126) für eine mechanische Verriegelung senkrecht zu den dem zweiten Möbelteil (104) zugewandten Abschnitten (120,121) des distalen Endes der Lippen (116,118) aufweisen,
- wobei die Nut (114,210) und die Feder (126) parallel zur Kantenlinie zwischen der Außenseite und dem Abschnitt (120) des distalen Endes der oberen Lippe (116) verlaufen und innerhalb der Verbindungsfuge (120) ausgebildet sind,
- wobei die Verriegelungselemente (110,112,212,226) ineinander greifen und in Anlage aneinander kommen und
- wobei das erste Verriegelungselement (110,212) und das zweite Verriegelungselement (112,226) durch eine formschlüssige Verbindung miteinander verbindbar sind, **dadurch gekennzeichnet,**
- **dass** die Verriegelungselemente (110,112) innerhalb der Verbindungsfuge enden und
- **dass** das erste Verriegelungselement (110,212) und/oder das zweite Verriegelungselement (112,226) einen elastisch verformbaren Abschnitt aufweisen, der einen während des Zusammenfügens der Möbelteile (102,104) zu überwindenden mechanischen Widerstand bildet, wobei das erste Verriegelungselement (110,212) und das zweite Verriegelungselement (112,226) durch eine kraftschlüssige Verbindung derart miteinander verbunden werden können, dass im verbundenen Zustand die elastische Verformung vollständig oder nur teilweise wieder aufgehoben sein kann.

2. Möbel nach Anspruch 1,
**dadurch gekennzeichnet,**
**dass** die Verriegelungselemente (110,112,212,226) durchgängig entlang der Verbindungsfläche (106,108) ausgebildet sind.

3. Möbel nach Anspruch 1,
**dadurch gekennzeichnet,**
**dass** die Verriegelungselemente (110,112,212,226) abschnittsweise entlang der Verbindungsfläche (106,108) ausgebildet sind.

4. Möbel nach einem der Ansprüche 1 bis 3,
**dadurch gekennzeichnet,**
**dass** die Profile der Verriegelungselemente (110,112,212,226) vor den sichtbaren Kanten der plattenförmigen Möbelteile (102,104) abgesetzt sind.

5. Möbel nach einem der Ansprüche 1 bis 4,
**dadurch gekennzeichnet,**
**dass** die Verbindung zwischen den Verriegelungselementen (110,112,212,226) lösbar ist.

6. Möbel nach einem der Ansprüche 1 bis 5,
**dadurch gekennzeichnet,**
**dass** die Verriegelungselemente (110,112,212,226) im verbundenen Zustand zusätzlich miteinander verklebt sind.

7. Möbel nach Anspruch 6,
**dadurch gekennzeichnet,**
**dass** der Kleber werkseitig aufgebracht ist.

8. Möbel nach einem der Ansprüche 1 bis 7,
**dadurch gekennzeichnet,**
**dass** die Möbelteile (102,104) an der Kantenlinie zwischen Außenseite und dem senkrecht verlaufenden Abschnitt (120,128) eine Abschrägung aufweisen.

9. Möbel nach Anspruch 8,
**dadurch gekennzeichnet,**
**dass** die Abschrägung mit einer Beschichtung, vorzugsweise mit einer Lackschicht versehen ist.

10. Möbel nach einem der Ansprüche 1 bis 9,
**dadurch gekennzeichnet,**
**dass** im Bereich der Verbindungsflächen (106,108) eine Dichtung vorgesehen ist, die im verbundenen Zustand der Möbelteile die Trennfuge zwischen den Möbelteilen (102,104) abdichtet.

11. Möbel nach einem der Ansprüche 1 bis 10,
**dadurch gekennzeichnet,**
**dass** die Verriegelungselemente (110,112,212,226) einstückig mit dem Material des Möbelteils (102,104) ausgebildet sind.

12. Möbel nach einem der Ansprüche 1 bis 10,
**dadurch gekennzeichnet,**
**dass** eines der beiden Verriegelungselemente (110,112,212,226) oder beide Verriegelungselemente (110,112,212,226) aus einem vom Plattenmaterial verschiedenen Material hergestellt und mit dem jeweiligen plattenförmigen Möbelteil (102,104) verbunden ist/sind.

## Claims

1. Meuble
- comportant au moins deux parties de meuble (102, 104) en forme de plaques composees d'un materiau a base de bois et reliees entre elles, qui sont orientees angulairement l'une par rapport a l'autre,
- dont une première partie de meuble (102) présente au moins une premiere surface de liaison (106),
- dont une seconde partie de meuble (104) présente une seconde surface de liaison (108) et
- dans lequel la première surface de liaison (106) et la seconde surface de liaison (108) forment un joint de liaison (120) à l'état raccordé des parties de meuble (102, 104),
- la premiere surface de liaison (106) comportant un premier element de verrouillage (110, 212) sous forme d'une rainure (114, 210) qui est limitée par une lèvre superieure (116) et une lèvre inferieure (118) comportant respectivement une extrémité distale, et la seconde surface de liaison (108) comportant un second element de verrouillage (112, 226) sous forme d'un ressort (126) pour un verrouillage mécanique perpendiculairement aux sections (120, 121) tournées vers la seconde partie de meuble (104) de l'extrémité distale des lèvres (116, 118),
- la rainure (114, 210) et le ressort (126) s'étendant parallèlement à la ligne d'arête entre la face extérieure et la section (120) de l'extrémité distale de la lèvre superieure (116) et étant réalisés dans le joint de liaison (120),
- les elements de verrouillage (110, 112, 212, 226) s'engrenant et se touchant, et
- le premier element de verrouillage (110, 212) et le second élément de verrouillage (112, 226) pouvant être reliés entre eux par une liaison par correspondance géométrique, **caractérisé en ce que**
- les elements de verrouillage (110,112, 212, 226) se terminent à l'intérieur du joint de liaison, et
- le premier element de verrouillage (110, 212) et/ou le second element de verrouillage (112, 226) présentent une section élastiquement déformable qui établit une résistance mécanique à surmonter pendant l'assemblage des parties de meuble (102, 104), le premier element de verrouillage (110, 212) et le second element de verrouillage (112, 226) pouvant être reliés entre eux par une liaison par correspondance mécanique de manière à ce que, à l'état raccordé, la déformation élastique puisse être suspendue en totalité ou seulement en partie.

2. Meuble selon la revendication 1,
**caractérisé en ce que**
les elements de verrouillage (110, 112, 212, 226) sont réalisés en continu le long de la surface de liaison (106, 108).

3. Meuble selon la revendication 1,
**caractérisé en ce que**
les elements de verrouillage (110, 112, 212, 226) sont réalisés par sections le long de la surface de liaison (106, 108).

4. Meuble selon une des revendications 1 à 3,
**caractérisé en ce que**
les profiles des elements de verrouillage (110, 112, 212, 226) se terminent devant les bords visibles des parties de meuble (102,104) en forme de plaques.

5. Meuble selon une des revendications 1 à 4,
**caractérisé en ce que**
la liaison entre les elements de verrouillage (110, 112, 212, 226) est dissociable.

6. Meuble selon une des revendications 1 à 5,
**caractérisé en ce que**
les elements de verrouillage (110, 112, 212, 226), en état raccordé, sont de plus collés entre eux.

7. Meuble selon la revendication 6,
**caractérisé en ce que**
la colle est appliquée en usine.

8. Meuble selon une des revendications 1 à 7,
**caractérisé en ce que**
les parties de meuble (102, 104) présentent un biseau au niveau de la ligne d'arête entre la face extérieure et la section s'étendant perpendiculairement (120, 128).

9. Meuble selon la revendication 8,
**caractérisé en ce que**
le biseau est pourvu d'un revêtement, de préférence d'une couche de peinture.

10. Meuble selon une des revendications 1 à 9,
**caractérisé en ce que**,
au niveau des surfaces de liaison (106, 108), il est prévu un joint qui, à l'état raccordé des parties de meuble, colmate le joint de séparation entre les parties de meuble (102, 104).

11. Meuble selon une des revendications 1 à 10,
**caractérisé en ce que**,
les elements de verrouillage (110, 112, 212, 226) forment bloc avec le matériau de la partie de meuble (102, 104).

12. Meuble selon une des revendications 1 à 10,
**caractérisé en ce que**,
un des elements de verrouillage (110, 112, 212, 226) ou tous les deux elements de verrouillage (110, 112, 212, 226) est/sont fabriqué(s) d'un matériau différent du matériau de plaques et relié(s) à la partie de meuble (102, 104) respective.

## Revendications

1. Furniture,
- comprising at least two plate-shaped furniture parts (102, 104) consisting of a wood-based material and connected to one another, which are aligned at an angle to one another,
- of which a first furniture part (102) has at least one first connecting surface (106),
- of which a second furniture part (104) has a second connecting surface (108) and
- wherein the first connecting surface (106) and the second connecting surface (108) in the connected state of the furniture parts (102, 104) form a connecting joint (120),
- wherein the first connecting surface (106) has a first locking element (110, 212) in the form of a groove (114, 210), which is delimited by an upper lip (116) and a lower lip (118) with respectively one distal end and the second connecting surface (108) has a second locking element (112, 226) in the form of a tongue (126) for a mechanical locking perpendicular to the sections (120, 121) of the distal end of the lips (116, 118) facing the second furniture part (104),
- wherein the groove (114, 210) and the tongue (126) run parallel to the edge line between the outer side and the section (120) of the distal end of the upper lip (116) and are formed inside the connecting joint (120),
- wherein the locking elements (110, 112, 212,226) interlock with each other and abut against each other, and
- wherein the first locking element (110, 212) and the second locking element (112, 226) can be connected to one another by a positive connection,
**characterized in that**
- the locking elements (110, 112, 212, 226) end within the connecting joint and
- the first locking element (110, 212) and/or the second locking element (112, 226) have an elastically deformable section which forms a mechanical resistance to be overcome during the joining together of the furniture parts (102, 104), wherein the first locking element (110, 212) and the second locking element (112, 226) can be connected to one another by a non-positive connection in such a manner that in the connected state the elastic deformation can be completely or only partially cancelled again.

2. The furniture according to claim 1,
**characterized in that**
the locking elements (110, 112, 212, 226) are formed continuously along the connecting surface (106, 108).

3. The furniture according to claim 1,
**characterized in that**
the locking elements (110, 112, 212, 226) are formed in sections along the connecting surface (106, 108).

4. The furniture according to any one of claims 1 to 3,
**characterized in that**
the profiles of the locking elements (110, 112, 212, 226) end before the visible edges of the plate-shaped furniture parts (102,104).

5. The furniture according to any one of claims 1 to 4,
**characterized in that**
the connection between the locking elements (110, 112, 212, 226) is releasable.

6. The furniture according to any one of claims 1 to 5,
**characterized in that**
the locking elements (110, 112, 212, 226) are additionally adhesively bonded to one another in the connected state.

7. The furniture according to claim 6,
**characterized in that**
the adhesive has been applied at the factory.

8. The furniture according to any one of claims 1 to 7,
**characterized in that**
the furniture parts (102, 104) have a chamfer on the edge line between outer side and the perpendicularly running section (120, 128).

9. The furniture according to claim 8,
**characterized in that**
the chamfer is provided with a coating, preferably with a varnish layer.

10. The furniture according to any one of claims 1 to 9,
**characterized in that**
in the region of the connecting surfaces (106, 108), a seal is provided which in the connected state of the furniture parts seals the joint between the furniture parts (102, 104).

11. The furniture according to any one of claims 1 to 10,
**characterized in that**
the locking elements (110,112, 212, 226) are formed in one piece with the material of the furniture part (102,104).

12. The furniture according to any one of claims 1 to 10, **characterized in that**
one of both locking elements (110, 112, 212, 226) or both locking elements (110, 112, 212, 226) is/are made of a material different from the plate material and connected to the respective plate-shaped furniture part (102,104).
